# EUROPÄISCHE PATENTSCHRIFT

(11) **EP 1 069 415 B1**
(45) Veröffentlichungstag und Bekanntmachung des Hinweises auf die Patenterteilung: **28.09.2005**
(21) Anmeldenummer: 00114378.3
(22) Anmeldetag: 05.07.2000
(51) Int. Cl.: G01J 3/46

(54) **Verfahren und Vorrichtung zur spektroskopischen Untersuchung von plastifizierten Extrudaten**
Method and apparatus for a spectroscopic examination of plasticized extrudates
Méthode et dispositif pour l'examen spectroscopique d'extrudats plastifiés

(30) Priorität: 14.07.1999 DE 19932746
(43) Veröffentlichungstag der Anmeldung: 17.01.2001
(73) Patentinhaber: Fraunhofer-Gesellschaft zur Förderung der angewandten Forschung e.V., 80686 München (DE)
(72) Erfinder: Rohe, Thomas, 76327 Pfinztal (DE)

(56) Entgegenhaltungen:
- EP-A- 0 816 815
- DE-A- 3 505 036
- GB-A- 1 593 474
- PATENT ABSTRACTS OF JAPAN vol. 1995, no. 02, 31. März 1995 (1995-03-31) & JP 06 304995 A (FUJIKURA LTD), 1. November 1994 (1994-11-01)

## Beschreibung

Die Erfindung betrifft ein Verfahren und eine Vorrichtung zur spektroskopischen Untersuchung von plastifizierten Extrudaten nach dem Oberbegriff des Anspruchs 1 bzw. 4.

Extrusionsmaschinen oder Extruder sind in vielfältigen Ausführungen bekannt und dienen zur kontinuierlichen Verarbeitung von thermoplastischen Kunststoffen, wie Polyolefinen, Polyvinylchlorid, Polystyrol etc., zu Formteilen oder zur Herstellung pharmazeutischer Produkte, Lebensmittel oder dgl. Sie weisen in der Regel einen Auffülltrichter zum Bestücken des Extruders mit einem pulver-, granulat- oder agglomeratartigen Aufgabegut, eine in einem beheizbaren bzw. kühlbaren Gehäuse geführte Fördereinrichtung und einen Spritzkopf, z.B. eine Düse, auf. Die Fördereinrichtung ist in der Regel als gegebenenfalls stufenförmige Extruderschnecke oder auch als Kolben ausgebildet. Neben Einschneckenextrudern sind Zwei- oder Mehrschneckenextruder bekannt, die beispielsweise bei der Herstellung von Verbundwerkstoffen Verwendung finden.

Durch Extrudieren (Strangpressen) können beispielsweise Profile, Rohre, Schläuche, Kabelummantelungen oder dgl. hergestellt werden. Während der Extrusion kann die plastifizierte Formmasse bzw. das plastifizierte Extrudat verdichtet, gemischt, homogenisiert, ent- oder begast, vollständig aufgeschmolzen und/oder chemisch umgewandelt werden. Zur Kontrolle und Steuerung bzw. zur Optimierung solcher Prozesse ist es bekannt, den Druck und die Temperatur des plastifizierten Extrudates im Extruder kontinuierlich zu messen. Weiterhin ist es bekannt, die Farbe des plastifizierten Extrudates zu bestimmen, wobei insbesondere spektroskopische Verfahren verwendet werden, da diese sowohl qualitative als auch quantitative, schnelle und zerstörungsfreie Analysenverfahren darstellen.

Die DE 195 07 750 A1 beschreibt ein Verfahren zur kontinuierlichen Messung der Farbe von Extrudaten thermoplastischer Kunststoffe, wobei das Extrudat durch ein mit einer Flüssigkeit gefülltes Gefäß geleitet wird, in welche der Meßkopf eines Spektralphotometers eintaucht.

Der DE 35 05 036 A1 ist ein Verfahren und eine Vorrichtung zur Regelung des Antriebs von Dosiereinrichtungen für die gesteuerte Zugabe von Farbkonzentraten und Zusatzstoffen in einen mit einer Grundkomponente dosiert beschickbaren Aufgabetrichter einer Schneckenmaschine zur Aufbereitung einer Fertigmischung nach Mischungsvorgabe entnehmbar, wobei die Fertigmischung in ihrer Farbintensität regelmäßig in kurzen Zeitabständen durch ein mit dem Austrittsende der Schneckenmaschine mittels einer Meßsonde verbundenes Spektrometer überprüft und zur Bildung eines Meßsignals für die gesteuerte Zugabe der Einzelkomponenten in einem mit einer Steuer- und Regeleinheit verbundenen Auswertegerät mit dem Sollwert der Farbintensität einer Standard-Mischung verglichen wird. Die Farbintensität wird nach dem Prinzip der Remissionsspektroskopie (Reflexionsspektroskopie) ermittelt, die auf der Untersuchung der von im wesentlichen lichtundurchlässigen, diffus streuenden Stoffen, wie Pigmenten, Farbstoffen oder dergleichen, reflektierten Strahlung beruht. Da das Remissionsspektrum lediglich Informationen über die Absorptions- und Streueigenschaften von mit Farbstoffen versetzten Stoffen enthält, ist eine insbesondere quantitative Bestimmung der chemischen Zusammensetzung von Extrudaten auf diese Weise nicht möglich.

Zur Bestimmung der chemischen Zusammensetzung von plastifizierten Extrudaten im Extruder ist es bekannt, das Extrudat unmittelbar vor dem Austritt aus dem Extruder in einem Bereich zwischen Extruderschnecke und Spritzkopf mit einem kontinuierlichen Spektrum elektromagnetischer Strahlung zu bestrahlen und die aus dem Extrudat austretende Strahlung nach Wechselwirkung mit demselben spektroskopisch zu untersuchen. Hierbei wird insbesondere die auf dem Kirchhoff'schen Gesetz beruhende Absorptionsspektroskopie angewendet. Da nach dem Kirchhoff'schen Gesetz eine Substanz diejenige Strahlungsart absorbiert, die sie bei Anregung emittiert, absorbiert eine in den Strahlengang eines kontinuierlichen Spektrums gebrachte Substanz die für sie charakteristische Wellenlängen heraus, so daß ein für die jeweilige Substanz charakteristisches Absorptionslinienspektrum erhalten wird. Auf diese Weise können z.B. Aussagen über die chemische Zusammensetzung, die Reaktionskinetik oder die Feuchte des Extrudats erhalten werden.

Nachteilig hierbei ist einerseits, daß die spektroskopische Untersuchung auf einen Bereich des Extruders zwischen Extruderschnecke und Spritzkopf beschränkt ist, so daß zwar die endgültige Zusammensetzung des Extrudates, nicht aber die zur Optimierung des Extrusionsprozesses erforderlichen Zusammensetzungen des Extrudates im Bereich der Extruderschnecke erfaßt werden können. Andererseits ist der Absorptionsweg der elektromagnetischen Strahlung im wesentlichen durch die Geometrie des Spritzkopfs des Extruders festgelegt, da im Bereich des Spritzkopfs aus strömungstechnischen Gründen keine Sensoren in den Schmelzekanal des Extrudes vorstehen dürfen. Der Absorptionsweg der elektromagnetischen Strahlung, der folglich in der Regel etwa dem Durchmesser des Extrudergehäuses zwischen Fördereinrichtung und Spritzkopf entspricht, kann somit für die jeweiligen gewünschten Spektralbereiche nicht optimiert werden, wobei der Absorptionsweg entweder zu kurz ist, so daß ein zu geringer Anteil der Strahlung absorbiert wird, oder der Absorptionsweg ist zu lang, so daß ein zu hoher Anteil der Strahlung absorbiert wird und die Strahlungsintensität der aus dem Extrudat austretenden Strahlung gering ist. Beides führt zu einer geringen Meßgenauigkeit und -empfindlichkeit.

Die EP 816 815 A1 zeigt ein Verfahren zur kontinuierlichen Farbmessung von Kunststoff-Formmassen, bei dem Licht über Sender-Lichtleiter und einen Sensorkopf in die Schmelze der Formmasse eingeleitet und das in dieser bzw. genauer in deren Randbereich reflektierte Licht über Empfängerlichtleiter zu einem Spektrometer oder Mehrbereichsphotometer geführt wird, wobei zumindest Sender-Lichtleiter oder Empfänger-Lichtleiter mehrfach vorhanden sind und einander zugeordnete Sender- und Empfängerlichtleiter jeweils gleichen Abstand voneinander aufweisen.

Die JP 03-304995 A zeigt eine konstruktive Ausgestaltung zum radialen Einstrahlen von Licht in ein Extrudat und Reflektion an geneigten Stirnseitenflächen einer Extruderschnecke sowie Empfang der reflektierten Strahlung an ebenfalls geneigten Flächen im Austrittskanal des Extrudats.

Die GB 1 593 474 zeigt die Reflektion an einem in einem fluidführenden Rohr befindlichen weiteren Rohr zur Absorptionsmessung.

Der Erfindung liegt daher die Aufgabe zugrunde, ein Verfahren der eingangs genannten Art vorzuschlagen, welches eine spektroskopische Untersuchung der plastifizierten Extrudate an einem beliebigen Bereich der Fördereinrichtung des Extruders und eine Optimierung des Absorptionsweges ermöglicht und somit eine hohe Meßgenauigkeit und -empfindlichkeit sicherstellt.

Erfindungsgemäß wird diese Aufgabe bei einem Verfahren der eingangs genannten Art durch die Merkmale des Anspruchs 1 gelöst. Zur Lösung sieht die Erfindung weiterhin eine gattungsgemäße Vorrichtung mit den kennzeichnenden Merkmalen des Anspruchs 4 vor.

Erfindungsgemäß ist also vorgesehen, daß ein kontinuierliches Spektrum der elektromagnetischen Strahlung einer Strahlungsquelle durch die Extruderwand in das Extrudat eingekoppelt wird, dieses mit einer vorherbestimmbaren Weglänge durchläuft, an der Fördereinrichtung des Extruders reflektiert wird und das Extrudat nochmals im wesentlichen mit der gleichen Weglänge durchläuft, bevor es durch die Extruderwand aus dem Extrudat austritt. Die aus dem Extrudat ausgetretene elektromagnetische Strahlung kann beispielsweise über Lichtleitfasern zu einem Sensor weitergeleitet, spektralzerlegt und das Absorptionslinienspektrum bestimmt werden. Der Absorptionsweg der elektromagnetischen Strahlung kann durch Variation der dem Abstand zwischen Extruderwand und Fördereinrichtung entsprechenden Weglänge, welche dem halben Absorptionsweg entspricht, in Abhängigkeit des verwendeten Spektrums der Strahlung optimiert werden. Durch Variation des Absorptionsweges können somit je nach Art des Extrudates verschiedene Spektralbereiche elektromagnetischer Strahlung in das Extrudat eingekoppelt bzw. Absorptionslinienspektren der verschiedenen Spektralbereiche erhalten werden. Durch das erfindungsgemäße Verfahren können derartige Untersuchungen erstmals im Bereich der Fördereinrichtung des Extruders durchgeführt werden, ohne den Extrusionsprozeß zu beeinflussen. Hierdurch kann das Extrudat zu einem erheblich früheren Zeitpunkt untersucht werden, als es mit den Methoden gemäß dem Stand der Technik möglich ist, bei denen das Extrudat zwischen Fördereinrichtung und Spritzkopf, also unmittelbar vor Austritt aus dem Extruder, untersucht wird. Die in den verschiedenen Stadien des Extrusionsprozesses erhaltenen Meßwerte können beispielsweise zur Prozeßsteuerung, -regelung oder -optimierung verwendet werden.

Je nach charakteristischem Absorptionslinienspektrum des jeweiligen Extrudates kann dieses mit elektromagnetischer Strahlung mit einer Wellenlänge im Bereich von etwa 10 mm (Mikrowellen) bis zu etwa 10 nm (Ultraviolett) bestrahlt werden. Es kommen also sämtliche bekannten absorptionsspektroskopischen Untersuchungen, z.B. UV-Spektroskopie (Ultraviolett), VIS-Spektroskopie (sichtbares Licht), NIR-Spektroskopie (nahes Infrarot), IR-Spektroskopie (Infrarot) oder NMR- bzw. EPR-Spektroskopie (Mikro- bzw. Radiowellen), in Frage.

In bevorzugter Ausführung ist vorgesehen, daß pro Umdrehung der als Extruderschnecke ausgebildeten Fördereinrichtung wenigstens ein Absorptionsspektrum bestimmt wird. Es wird also immer dann wenigstens ein Absorptionsspektrum bestimmt, wenn die kontinuierlich rotierende Extruderschnecke eine zur Reflexion der elektromagnetischen Strahlung geeignete Anordnung bezüglich dem im wesentlichen radial zu derselben durch das Extrudergehäuse eingekoppelten elektromagnetischen Strahlung erreicht hat.

Die Erfindung ist auch auf eine Vorrichtung zur Durchführung eines solchen Verfahrens gerichtet. Eine Vorrichtung zur spektroskopischen Untersuchung von plastifizierten Extrudaten, mit einem Extruder mit einem Gehäuse und einer Fördereinrichtung, wie einer Extruderschnecke, und wenigstens einer Meßeinrichtung mit einer Strahlungsquelle zur Erzeugung von elektromagnetischer Strahlung und einem Sensor zur Bestimmung von Absorptionsspektren, zeichnet sich dadurch aus, daß die Meßeinrichtung im Bereich der Fördereinrichtung des Extruders angeordnet ist, wobei die von der Strahlungsquelle erzeugte elektromagnetische Strahlung im wesentlichen radial zu der Fördereinrichtung in das Extrudat einbringbar, nach einer vorherbestimmbaren Weglänge an der Fördereinrichtung reflektierbar und das Absorptionsspektrum der aus dem Extrudat ausgetretenen Strahlung nach nochmaligem Durchlauf der Weglänge mittels des Sensors bestimmbar ist.

Wie bereits erwähnt, ist die Fördereinrichtung bevorzugt als Extruderschnecke ausgebildet, wobei die Extruderschnecke beispielsweise entweder einen dem Innendurchmesser des Extrudergehäuses etwa entsprechenden Außendurchmesser, der ausschließlich am Reflexionsbereich um die dem halben Absorptionsweg entsprechende Weglänge verringert ist, aufweisen kann, oder der Außendurchmesser der Extruderschnecke ist um die dem Absorptionsweg entsprechende doppelte Weglänge kleiner als der Innendurchmesser des Extrudergehäuses und beispielsweise auf einer zentralen Welle des Extrudergehäuse gelagert.

In bevorzugter Ausführung ist vorgesehen, daß das Gehäuse des Extruders seitlich der Meßeinrichtung wenigstens ein Fenster zum Ein- und Austreten der elektromagnetischen Strahlung in das bzw. aus dem Extrudat aufweist. Um die aus dem Extrudat austretende elektromagnetische Strahlung von der in das Extrudat eintretenden Strahlung optisch zu isolieren, ist vorzugsweise ein aus zwei separaten Fenstersegmenten für die in das Extrudat eintretende Strahlung bzw. für die aus dem Extrudat austretende Strahlung bestehendes Fenster vorgesehen, wobei die Fenstersegmente z.B. nebeneinander oder im wesentlichen konzentrisch angeordnet sein können. Alternativ können zwei mit Abstand angeordnete Einzelfenster für die in das Extrudat eintretende Strahlung bzw. für die aus dem Extrudat austretende Strahlung vorgesehen sein.

Um insbesondere bei Koextrusionsprozessen und/oder bei mit einer chemischen Reaktion bzw. Be- und Entgasungsvorgängen oder dgl. einhergehenden Extrusionsprozessen eine optimale Prozeßsteuerung und -kontrolle zu erreichen, ist in bevorzugter Ausführung vorgesehen, daß die Vorrichtung zwei oder mehrere, insbesondere in Längsrichtung der Fördereinrichtung des Extruders beabstandete Meßeinrichtungen aufweist.

Nachstehend ist die Erfindung anhand von Ausführungsbeispielen unter Bezugnahme auf die Zeichnungen näher erläutert. Dabei zeigen:
- Fig. 1: einen Querschnitt durch eine Ausführungsform einer erfindungsgemäßen Vorrichtung im Bereich der Meßeinrichtung und
- Fig. 2: einen Detailschnitt durch eine weitere Ausführungsform.

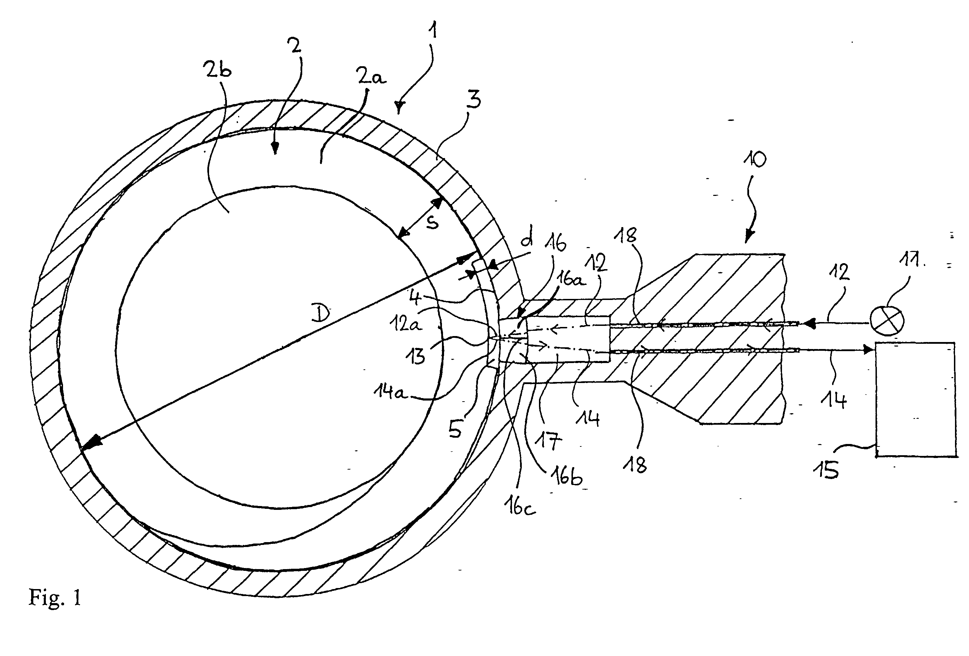

Die in Fig. 1 dargestellte Vorrichtung zur spektroskopischen Untersuchung von plastifizierten Extrudaten weist einen Extruder 1 mit einem Gehäuse 3 und einer als Extruderschnecke ausgebildeten Fördereinrichtung 2 sowie eine seitlich der Förderschnecke 2 angeordnete Meßeinrichtung 10 auf. Die Meßeinrichtung 10 ist mit einer Strahlungsquelle 11 zur Erzeugung von elektromagnetischer Strahlung 12 und einem Sensor 15 zur Bestimmung von Absorptionsspektren ausgestattet. Wie aus der Zeichnung ersichtlich, ist mit D der Außendurchmesser der Extruderschnecke 2 bezeichnet, wobei die Extruderschnecke 2 am Umfang eines Schneckenkörpers 2b angeordnete Windungen 2a aufweist. Der Durchmesser D der Extruderschnecke 2 entspricht in der gezeigten Ausführungsform im wesentlichen dem Innendurchmesser des Extrudergehäuses 3. An einem Reflexionsbereich 13 ist der Durchmesser D der Extruderschnecke 2 radial um eine Weglänge d ausgespart. In der dargestellten Ausführungsform ist die Weglänge d kleiner als die Höhe s der Windungen 2a der Extruderschnecke 2. Die Extruderschnecke 2 weist zumindest am Reflexionsbereich 13 eine im wesentlichen radial gerichtete, glatte Oberfläche auf und ist beispielsweise galvanisch beschichtet, insbesondere hartverchromt. Die Oberfläche der Extruderschnecke 2 kann am Reflexionsbereich 13 entweder kreissegmentartig mit einem Radius (D/2-d) gekrümmt sein, oder es können ein oder mehrere, in Umfangsrichtung der Extruderschnecke 2 hintereinander angeordnete, ebene Reflexionsbereiche vorgesehen sein, wobei in letztgenanntem Fall die Normale des ebenen Reflexionsbereichs senkrecht bezüglich der Tangente an den Umfang der Extruderschnecke angeordnet ist.

Das Gehäuse 3 des Extruders 1 weist seitlich der Meßeinrichtung 10 ein für das jeweilige Spektrum der von der Strahlungsquelle 11 erzeugten elektromagnetischen Strahlung durchlässiges Fenster 16 auf. Das Fenster 16 besteht z.B. aus Quarz, Glas, Saphir oder dgl. Das Fenster 16 besteht insbesondere aus zwei separaten Fenstersegmenten 16a, 16b für die in das Extrudat eintretende Strahlung 12 bzw. die aus dem Extrudat austretende Strahlung 14. Auf der dem Extruder 1 abgewandten Seite des Fensters 16 ist eine optische Anordnung 17 zur Fokussierung der elektromagnetischen Strahlung vorgesehen, die beispielsweise mehrere (nicht dargestellte) Linsen mit veränderbarer Brennweite aufweisen kann. Die optische Anordnung 17 ist über Lichtleiter 18, z.B. Glasfasern, mit der Strahlungsquelle 11 bzw. mit dem Sensor 15 verbunden.

Durch die dargestellte Ausgestaltung ist die Extruderschnecke 2 einerseits auf herkömmliche Weise im Extrudergehäuse 3 lagerbar, andererseits ist eine einfache Nachrüstung bekannter Extrusionsvorrichtungen mit einer erfindungsgemäßen Meßeinrichtung möglich, indem das Gehäuse der Extrusionsvorrichtung seitlich der Extruderschnecke mit einem für elektromagnetische Strahlung durchlässigen Fenster ausgestattet, die Meßeinrichtung angeordnet und die Extruderschnecke unter Ausbildung eines mit der Weglänge d von der Gehäuseinnenwand der Extrusionsvorrichtung beabstandeten, glatten, bezüglich des Durchmessers der Extruderschnecke senkrechten Reflexionsbereiches z.B. abgeschliffen, -gefräst oder dgl. und gegebenenfalls'galvanisch beschichtet wird. Alternativ kann der Durchmesser D der Extruderschnecke beispielsweise um 2d kleiner als der Innendurchmesser des Extrudergehäuses und der Reflexionsbereich an einem Umfangsbereich der Schnecke angeordnet sein. In diesem Fall kann die Extruderschnecke beispielsweise auf einer zentralen Antriebswelle des Extrudergehäuses gelagert sein.

Nachfolgend ist die Wirkungsweise der erfindungsgemäßen Meßeinrichtung 10 näher erläutert. Die Strahlungsquelle 11 erzeugt beispielsweise ein kontinuierliches Spektrum elektromagnetischer Strahlung 12 in einem Wellenlängenbereich von etwa 1 µm bis etwa 10 µm (Nahinfrarot-Bereich). In der dargestellten Ausführung wird die von der Strahlungsquelle 11 emittierte Strahlung 12 über Lichtleiter 18, z.B. Glasfasern, in die optische Anordnung 17 geleitet, die zur Fokussierung der Strahlung 12 dient. Mittels der z.B. mehrere (nicht dargestellte) Linsen mit veränderbarer Brennweite aufweisenden optischen Anordnung 17 ist die elektromagnetische Strahlung 12 in Abhängigkeit von der Geometrie des Extruders 1 bzw. der Förderschnecke 2, des Brechungsindex des Extrudates etc. fokussierbar. Nach der Fokussierung durchläuft die Strahlung 12 das Fenstersegment 16a des z.B. aus Quarz, Glas, Saphir oder dgl. bestehenden, für das jeweilige Spektrum durchlässigen Fensters 16. Das Fenster 16 weist, wie bereits erwähnt, zwei über jeweils eine Berührungsfläche 16c nebeneinander angeordnete Fenstersegmente 16a, 16b auf, wobei die elektromagnetische Strahlung 12 durch das Fenstersegment 16a in das Extrudat eintritt und die Strahlung 14 durch das Fenstersegment 16b aus dem Extrudat austritt. Durch eine derartige Ausgestaltung des Fensters 16 wird verhindert, daß der Anteil der eintretenden Strahlung 12, welcher beim Eintritt in das Extrudat bzw. beim Austritt aus dem Fenstersegment 16a Totalreflexion erfährt, die austretende Strahlung 14 beeinträchtigt, indem die Berührungsfläche 16c eine "optische Isolation" darstellt. Andernfalls würde die Intensität der aus dem Extrudat austretenden Strahlung 14 durch den an der Grenzfläche Fenster/Extrudat reflektierten Anteil der eintretenden Strahlung 12 verstärkt und die Meßempfindlichkeit dadurch verringert, da die reflektierte Strahlung das gesamte Wellenlängenspektrum der eintretenden Strahlung enthält und die absorbierten Spektralbereiche der austretenden Strahlung 14 überlagert. Je nach Strahlengang kann das Fenster 16 z.B. auch zwei im wesentlichen runde, konzentrisch angeordnete Fenstersegmente aufweisen. Nach Austritt aus dem Fenstersegment 16a tritt die elektromagnetische Strahlung 12 im wesentlichen radial zu der Förderschnecke 2 in den Innenraum 5 des Gehäuses 3 des Extruders 1 bzw. in das plastifizierte Extrudat ein.

Die in das Extrudat eingetretene Strahlung 12a tritt in das Extrudat bis zu einer der durch den Abstand zwischen der Innenwand 4 des Extrudergehäuses 3 und dem Reflexionsbereich 13 der Extruderschnecke 2 festgelegten Weglänge d entsprechenden Eindringtiefe ein und wird an dem Reflexionsbereich 13 der Extruderschnecke 2 reflektiert. Die reflektierte Strahlung 14a durchläuft das Extrudat erneut mit der Weglänge d, so daß der Absorptionsweg insgesamt 2d beträgt. Die aus dem Extrudat austretende Strahlung 14 wird durch das Fenstersegment 16b, die optische Anordnung 17 und die Lichtleiter 18 der Meßeinrichtung 10 zu dem Sensor 15 geleitet und dort beispielsweise zur Bestimmung des Absorptionslinienspektrums spektralzerlegt.

Der Absorptionsweg der elektromagnetischen Strahlung ist durch Variation der Weglänge d variierbar, so daß die erfindungsgemäße Vorrichtung bedarfsweise für verschiedene, auf Anregung mit elektromagnetischer Strahlung mit verschiedenen Wellenlängenbereichen, z.B. Mikrowellen, fernes Infrarot, Infrarot, nahes Infrarot, sichtbares Licht oder Ultraviolett, beruhenden absorptionsspektrometrischen Untersuchungen geeignet ist. Hierzu ist entweder eine Extruderschnecke mit mehreren, oben erwähnten, in Umfangsrichtung hintereinander angeordneten Reflexionsbereichen mit unterschiedlicher Weglänge ausgerüstet, wobei bei der Messung nur die an den jeweils geeigneten Reflexionsbereich reflektierte Strahlung berücksichtigt wird, oder die Schnecke kann ausgewechselt werden.

Bei rotierender Extruderschnecke 2 ist wenigstens eine Messung pro Umdrehung der Schnecke 2 durchführbar, nämlich dann, wenn der Reflexionsbereich 13 der Schnecke 2 eine dem Fenster 16 der Meßeinrichtung 10 zugewandte Stellung erreicht.

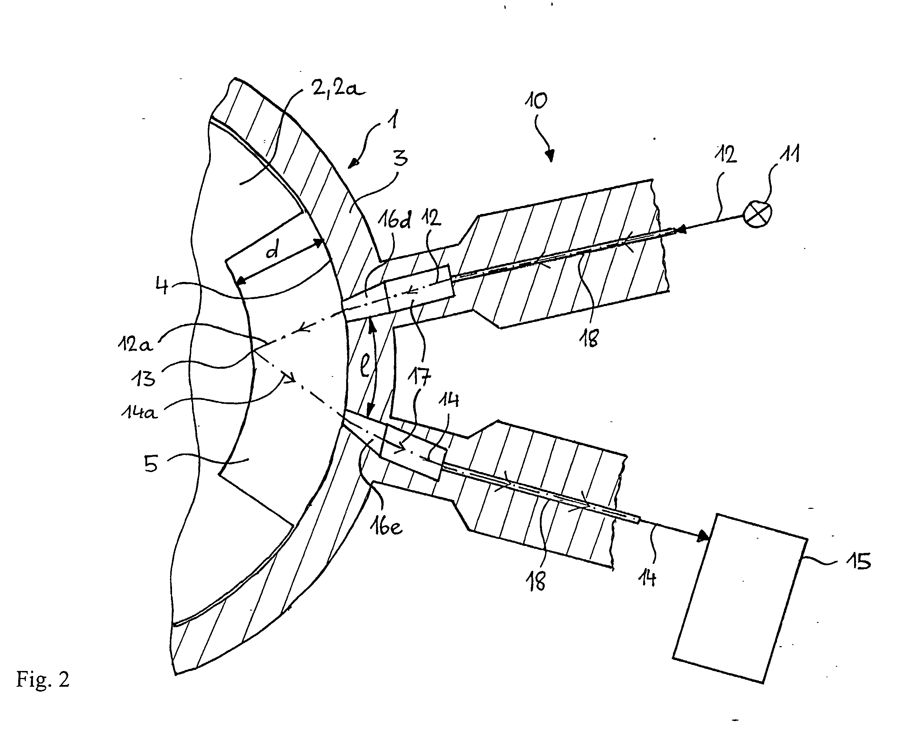

Die in Fig. 2 gezeigte Ausführungsform einer erfindungsgemäßen Vorrichtung unterscheidet sich von der Ausführung gemäß Fig. 1 dadurch, daß zwei mit Abstand 1 angeordnete Einzelfenster 16d, 16e für die in das Extrudat eintretende Strahlung 12 bzw. für die aus dem Extrudat austretende Strahlung 14 vorgesehen ist, wodurch ebenfalls eine optische Isolation der austretenden Strahlung 12 erreicht wird. Die Wirkungsweise entspricht der vorstehend unter Bezugnahme auf Fig. 1 erläuterten Wirkungsweise.

### Bezugszeichenliste

- 1: Extruder
- 2: Extruderschnecke
- 2a: Windungen
- 2b: Schneckenkörper
- 3: Extrudergehäuse
- 4: Innenwand des Extrudergehäuses
- 5: Innenraum des Extrudergehäuses
- 10: Meßeinrichtung
- 11: Strahlungsquelle
- 12,12a: eintretende Strahlung
- 13: Reflexionsbereich
- 14,14a: austretende Strahlung
- 15: Sensor
- 16: Fenster
- 16a, 16b: Fenstersegmente
- 16c: Berührungsfläche der Fenstersegmente
- 16d, 16e: Einzelfenster
- 17: optische Anordnung
- 18: Lichtleitern
- D: Durchmesser der Fördereinrichtung
- d: Weglänge der ein- bzw. austretenden Strahlung
- s: Höhe der Windungen
- l: Abstand zwischen den Einzelfenstern

## Patentansprüche

1. Verfahren zur spektroskopischen Untersuchung der chemischen Zusammensetzung von plastifizierten Extrudaten in einem Extruder (1) mit einer Fördereinrichtung (2), wie einer Extruderschnecke, indem das Extrudat mit elektromagnetischer Strahlung (12) bestrahlt und die aus dem Extrudat austretende Strahlung (14) nach Wechselwirkung mit demselben spektroskopisch untersucht wird, **dadurch gekennzeichnet, dass** das Extrudat im Bereich der Fördereinrichtung (2) des Extruders (1) im Wesentlichen radial zu derselben mit elektromagnetischer Strahlung (12) in einem Wellenlängenbereich von etwa 10mm bis etwa 10nm bestrahlt, die in das Extrudat eingetretene Strahlung (12a) nach einer vorherbestimmbaren Weglänge (d) an der Fördereinrichtung (2) reflektiert und das Absorptionsspektrum der nach nochmaligem Durchlauf der Weglänge (d) aus dem Extrudat ausgetretenen Strahlung (14) bestimmt wird.

2. Verfahren nach Anspruch 1, **dadurch gekennzeichnet, daß** das Extrudat mit elektromagnetischer Strahlung mit einer Wellenlänge im Bereich von etwa 10 mm (Mikrowellen) bis zu etwa 10 nm (Ultraviolett) bestrahlt wird.

3. Verfahren nach Anspruch 1 oder 2, **dadurch gekennzeichnet, daß** pro Umdrehung der als Extruderschnecke ausgebildeten Fördereinrichtung (2) wenigstens ein Absorptionsspektrum bestimmt wird.

4. Vorrichtung zur spektroskopischen Untersuchung der chemischen Zusammensetzung von plastifizierten Extrudaten, mit einem Extruder (1) mit einem Gehäuse (3) und einer Fördereinrichtung (2), wie einer Extruderschnecke und wenigstens einer Messeinrichtung (10) mit einer Strahlungsquelle (11) zur Erzeugung von elektromagnetischer Strahlung (12) und einem Sensor (15) zur Bestimmung von Absorptionsspektren, insbesondere zur Durchführung eines Verfahrens gemäß einem der Ansprüche 1 bis 3, **dadurch gekennzeichnet, dass** die Messeinrichtung (10) im Bereich der Fördereinrichtung (2) des Extruders (1) angeordnet ist, wobei die von der Strahlungsquelle (11) erzeugte elektromagnetische Strahlung (12) eines Wellenlängenbereichs von etwa 10mm bis etwa 10nm im Wesentlichen radial zu der Fördereinrichtung (2) in das Extrudat einbringbar, nach einer vorherbestimmbaren Weglänge (d) an der Fördereinrichtung reflektierbar und das Absorptionsspektrum der nach nochmaligem Durchlauf der Weglänge (d) aus dem Extrudat ausgetretenen Strahlung (14) mittels des Sensors (15) bestimmbar ist.

5. Vorrichtung nach Anspruch 4, **dadurch gekennzeichnet, daß** die Fördereinrichtung (2) als Extruderschnecke ausgebildet ist.

6. Vorrichtung nach Anspruch 4 oder 5, **dadurch gekennzeichnet, daß** das Gehäuse (3) des Extruders (1) seitlich der Meßeinrichtung (10) wenigstens ein Fenster (16) zum Ein- und Austreten der elektromagnetischen Strahlung (12, 14) in das bzw. aus dem Extrudat aufweist.

7. Vorrichtung nach einem der Ansprüche 4 bis 6, **dadurch gekennzeichnet, daß** ein aus zwei separaten Fenstersegmenten (16a, 16b) für die in das Extrudat eintretende Strahlung (12) bzw. für die aus dem Extrudat austretende Strahlung (14) bestehendes Fenster (16) vorgesehen ist.

8. Vorrichtung nach Anspruch 7, **dadurch gekennzeichnet, daß** die Fenstersegmente (16a, 16b) nebeneinander oder im wesentlichen konzentrisch angeordnet sind.

9. Vorrichtung nach einem der Ansprüche 4 bis 6, **dadurch gekennzeichnet, daß** zwei mit Abstand (l) angeordnete Einzelfenster (16d,16e) für die in das Extrudat eintretende Strahlung (12) bzw. für die aus dem Extrudat austretende Strahlung (14) vorgesehen sind.

10. Vorrichtung nach einem der Ansprüche 4 bis 9 mit wengistens zwei Meßeinrichtungen (10).

## Claims

1. Method for spectroscopic examination of the chemical composition of plasticised extrudates in an extruder (1) having a conveying device (2), such as an extruder screw, by irradiating the extrudate with electromagnetic radiation (12) and spectroscopically examining the radiation (14) emerging from the extrudate after interacting with with the same, **characterised in that** the extrudate is irradiated with electromagnetic radiation (12) in a wavelength range of approximately 10 mm to approximately 10 nm, in the region of the conveying device (2) of the extruder (1) substantially radially to the same, the radiation (12a) which has entered the extrudate is reflected at the conveying device (2) after a path length (d) which can be determined in advance and the absorption spectrum of the radiation (14), which has emerged from the extrudate after passing again along the path length (d), is determined.

2. Method according to claim 1, **characterised in that** the extrudate is irradiated with electromagnetic radiation with a wavelength in the range of approximately 10 mm (microwaves) to approximately 10 nm (ultraviolet).

3. Method according to claim 1 or 2, **characterised in that**, per rotation of the conveying device (2), which is configured as an extruder screw, at least one absorption spectrum is determined.

4. Device for spectroscopic examination of the chemical composition of plasticised extrudates, having an extruder (1) with a housing (3) and a conveying device (2), such as an extruder screw, and having at least one measuring device (10) with a radiation source (11) for generating electromagnetic radiation (12) and having a sensor (15) for determining absorption spectra, in particular for implementing a method according to one of the claims 1 to 3, **characterised in that** the measuring device (10) is disposed in the region of the conveying device (2) of the extruder (1), the electromagnetic radiation (12), which has a wavelength range of approximately 10 mm to approximately 10 nm and is generated by the radiation source (11), being able to be introduced into the extrudate substantially radially relative to the conveying device (2), being able to be reflected at the conveying device after a path length (d) which can be determined in advance and the absorption spectrum of the radiation, which has emerged from the extrudate after passing again along the path length (d), being able to be determined by means of the sensor (15).

5. Device according to claim 4, **characterised in that** the conveying device (2) is configured as an extruder screw.

6. Device according to claim 4 or 5, **characterised in that** the housing (3) of the extruder (1), laterally of the measuring device (10), has at least one window (16) for entrance and emergence of the electromagnetic radiation (12, 14) into or out of the extrudate.

7. Device according to one of the claims 4 to 6, **characterised in that** one window (16) is provided which comprises two separate window segments (16a, 16b) for the radiation (12) which is entering the extrudate or for the radiation (14) which is emerging from the extrudate.

8. Device according to claim 7, **characterised in that** the window segments (16a, 16b) are disposed adjacent to each other, or substantially concentrically.

9. Device according to one of the claims 4 to 6, **characterised in that** two individual windows (16d, 16e), which are disposed at a spacing (1), are provided for the radiation (12) which is entering the extrudate or for the radiation (14) which is emerging from the extrudate.

10. Device according to one of the claims 4 to 9 having at least two measuring devices (10).

## Revendications

1. Procédé d'examen spectroscopique de la composition chimique d'extrudats plastifiés dans une extrudeuse (1) comprenant un dispositif de transport (2), telle qu'une extrudeuse à vis, dans lequel on irradie l'extrudat avec un rayonnement électromagnétique (12) et, après l'interaction avec celui-ci, on examine de manière spectroscopique le rayonnement (14) sortant de l'extrudat,
**caractérisé en ce qu'**
on irradie l'extrudat, au niveau du dispositif de transport (2) de l'extrudeuse (1), pour l'essentiel radialement par rapport à lui-même avec un rayonnement électromagnétique (12) ayant une longueur d'onde comprise environ entre 10 mm et environ 10 nm, le rayonnement (12a) entrant dans l'extrudat est réfléchi après une longueur de chemin optique (d) pouvant être prédéfinie sur le dispositif de transport (2), et on détermine le spectre d'absorption du rayonnement (14) sortant de l'extrudat après le passage normal de cette longueur du chemin optique (d).

2. Procédé selon la revendication 1,
**caractérisé en ce qu'**
on irradie l'extrudat avec un rayonnement électromagnétique ayant une longueur d'onde comprise environ entre 10 mm (micro-ondes) et jusqu'à environ 10 nm (ultraviolets).

3. Procédé selon la revendication 1 ou 2,
**caractérisé en ce qu'**
au moins un spectre d'absorption est défini pour chaque rotation du dispositif de transport (2) ayant la forme d'une extrudeuse à vis.

4. Dispositif d'examen spectroscopique de la composition chimique d'extrudats plastifiés, comprenant une extrudeuse (1) avec un boîtier (3) et un dispositif de transport (2), telle qu'une extrudeuse à vis, et au moins un dispositif de mesure (10) avec une source de rayonnement (11) pour générer un rayonnement électromagnétique (12) et un capteur (15) pour définir des spectres d'absorption, en particulier pour mettre en oeuvre un procédé selon l'une des revendications 1 à 3,
**caractérisé en ce que**
le dispositif de mesure (10) est disposé dans la zone du dispositif de transport (2) de l'extrudeuse (1), le rayonnement électromagnétique (12) ayant une longueur d'onde dans la plage comprise environ entre 10 mm et 10 nm et généré par la source de rayonnement (11) est introduit pour l'essentiel radialement par rapport au dispositif de transport (2), est réfléchi après une longueur de chemin optique (d) qui peut être prédéfinie sur le dispositif de transport, et le spectre d'absorption du rayonnement (14) sortant de l'extrudat après le passage normal de cette longueur de chemin optique (d) est déterminé au moyen du capteur (15).

5. Dispositif selon la revendication 4,
**caractérisé en ce que**
le dispositif de transport (2) a la forme d'une extrudeuse à vis.

6. Dispositif selon la revendication 4 à 5,
**caractérisé en ce que**
le boîtier (3) de l'extrudeuse (1) présente, latéralement par rapport au dispositif de mesure (10), au moins une fenêtre (16) pour faire entrer et sortir le rayonnement électromagnétique (12, 14) dans l'extrudat ou de celui-ci.

7. Dispositif selon l'une des revendications 4 à 6,
**caractérisé en ce que**
l'un des deux segments séparés (16a, 16b) de la fenêtre (16) est prévu pour le rayonnement (12) entrant dans l'extrudat ou pour le rayonnement (14) sortant de l'extrudat.

8. Dispositif selon la revendication 7,
**caractérisé en ce que**
les segments de fenêtre (16a, 16b) sont disposés l'un à côté de l'autre ou pour l'essentiel de manière concentrique.

9. Dispositif selon l'une des revendications 4 à 6,
**caractérisé en ce que**
deux fenêtres individuelles (16d, 16e) disposées à une certaine distance (1) sont prévues pour le rayonnement (12) entrant dans l'extrudat ou pour le rayonnement (14) sortant de l'extrudat.

10. Dispositif selon l'une des revendications 4 à 9,
comprenant au moins deux dispositifs de mesure (10).
